# EUROPEAN PATENT SPECIFICATION

(11) **EP 1 633 576 B1**
(45) Date of publication and mention of the grant of the patent: **05.08.2009**
(21) Application number: 04735065.7
(22) Date of filing: 27.05.2004
(51) Int. Cl.: B43K 19/00

(54) **ROUNDED TIP OF A PEN FOR WRITING OR TYPING ON SCREENS OR KEYBOARDS**
ABGERUNDETE SPITZE EINES STIFTS ZUM SCHREIBEN ODER TIPPEN AUF BILDSCHIRMEN ODER TASTATUREN
STYLET PERMETTANT D'ECRIRE SUR DES ECRANS TACTILES ET/OU D'ENTRER DES DONNEES AU CLAVIER D'EQUIPEMENTS ELECTRONIQUES

(30) Priority: 13.06.2003 CH 103203; 06.10.2003 CH 169303
(43) Date of publication of application: 15.03.2006
(73) Proprietor: Freudiger, Luca, 6982 Agno (CH)
(72) Inventor: Freudiger, Luca, 6982 Agno (CH)
(74) Representative: Fiammenghi-Domenighetti, Delfina
(86) International application number: PCT/IB2004/001853
(87) International publication number: WO 2004/110783

(56) References cited:
- EP-A- 0 512 114
- DE-A- 4 121 551
- DE-A- 10 118 859
- GB-A- 286 543
- GB-A- 2 270 740
- US-A- 1 915 426

## Description

The present invention relates to the technological sector of accessories for electronic equipment such as computers and telephones.

It relates to the sector which deals with the manufacture of pens suitable for writing or typing on screens and/or keyboards of electronic equipment such as computers, personal organizers, palmtops and telephones.

As is known, these pens consist of an elongated stem which is able to be gripped - like that of a normal pen used for writing - and is provided with a coaxial cavity designed and made so as to house inside it a rounded tip which emerges partially from it so as to be able to perform its functions described above.

State of the art is represented by following documents:
DE-10118859 discloses a pen for writing on electronic screen comprising two parts, a stem and a weighing element made of a choice of heavy materials enabling a better pen-handling.
EP-0512114 discloses a sheet for recording installed in a measuring instrument like a tachograph comprising a sapphire needle.
US-1915426 discloses an improved stylus for recording instruments such as a tachometer comprising a tubular holding an abutment in one end, a sleeve movable endwise in the holder and biasing the sleeve, a pin extending through the bore of the sleeve and a freely rotable ball disposed in outer end of said sleeve and constituting the point of the stylus.

According to the present state of the art, these tips are made of one of various synthetic resins known for applications of this kind.

These resins, in addition to being prone to abrasion, have a roughness and/or a porosity which, although of a limited nature, result in the absorption of small foreign bodies such as fine particles and dust which, clinging to the surface of the tip, alter the shape of the point of contact between the tip and the object over which it must pass in order to perform its functions.

This results, among other things, in a smaller degree of precision when drawings lines on screens in addition to wear of the said screens which with time may adversely affect operation thereof.

The inventor of the subject of the present invention has had the idea that all the abovementioned drawbacks could be overcome by replacing the materials used hitherto for the manufacture of the abovementioned tips with other materials which have a much greater abrasion resistance and are devoid of roughness and porosity. He has therefore selected a group of materials which are today used for applications which are totally different owing to their relatively high cost, with the idea that, in view of the small volume of a tip, the increased cost due to use of the said materials is amply offset by the far greater working life of the pen and by the absence of the abovementioned drawbacks associated with the formation of incrustations and the like which may damage the electronic equipment on which a pen is used.

The materials chosen by the inventor for manufacture of a pen tip according to the invention are: hard natural or synthetic monocrystalline stones such as ruby and sapphire . All the abovementioned materials have in common the surface hardness characteristics necessary for obtaining the advantages described above, and, by means of grinding, smoothing, brushing or other operations of the known type, an exceptionally high surface finish is obtained, without a significant degree of roughness or porosity.

The subject of the present invention therefore consists of a pen suitable for writing and/or typing, as described in the accompanying Claim 1.

A preferred example of embodiment of the pen according to the invention will now be described, with reference also to the accompanying drawings, in which:
- Figure 1 is a longitudinal cross-sectional view, on a large scale, of the said example of embodiment of the pen according to the invention, which shows the position of the tip;
- Figure 2 is a side view, on an even larger scale, of the pen tip alone according to Figure 1.

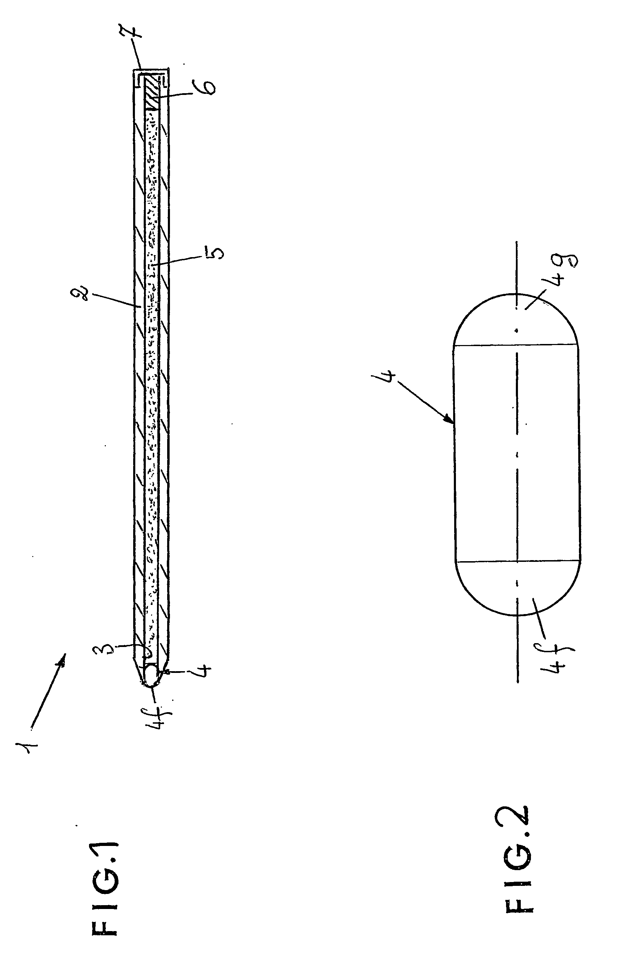

If we consider Figure 1, in said figure it can be seen how a pen 1 according to the invention comprises, as do moreover similar pens of the known type, an elongated stem 2 provided with a coaxial cavity 3 able to house a rounded tip 4, retaining it internally.

The said cavity 3 in Figure 1 extends over the whole length of the stem 2, but could also have a smaller length, i.e. limited to the sole end portion of the stem housing the tip 4.

The above cavity 3 in the case in question is a cylindrical shaped seat which is tapered outwards in the region of the tip 4 so as to retain the latter, allowing only one end 4f thereof to project outwards.

In the case considered here, the tip 4, which is illustrated more clearly in Figure 2, has the shape of a cylinder with its two ends 4f, 4g spherically rounded and is made of one of the materials already listed above, namely natural or synthetic ruby or sapphire.

In order to keep the tip 4 in the desired position, systems similar to those used for ball-tip pens may be used, for example, as shown in Figure 1, using a core 5 which is inserted inside the cavity 3 and may or may not be provided with a locating spring 6 and kept in position by a cap 7 mounted on the end of the stem 2 opposite to that housing the tip 4.

Other types of systems for fixing the tip may be used without affecting at all the results which can be obtained with the pen according to the invention and which depend essentially on the type of material used for manufacture of its tip.

A final note: in the example illustrated, both the ends 4f, 4g of the tip 4 are spherically rounded; depending on the design requirements, the tip 4 may also have a single rounded end, such as 4f intended to project from the abovementioned cavity 3, or may have a spherical shape (these two cases are not shown in the drawings).

## Claims

1. Pen (1) suitable for writing and/or typing on screens and/or keyboards of electronic equipment such as computers, personal organizers, palmtops, telephones , comprising an elongated stem (2) provided at at least one end (2e) with a coaxial cavity (3) able to house and retain inside it a rounded tip (4) this tip (4) is made of a material chosen from a group comprising synthetic or natural hard stones **characterized in that** said hard stones are monocrystalline stones.

2. Pen according to Claim 1, in which the said tip (4) is made of monocrystalline synthetic ruby.

3. Pen according to Claim 1, in which the said tip is made of monocrystalline synthetic sapphire.

4. Pen according to one of the preceding claims, in which the said elongated stem (2) terminates at one end in a portion in which a cylindrical seat (3) is formed, said seat being tapered outwards and able to house inside it the said tip (4) which is also shaped as a cylinder and at least the end (4f) of which projecting from the said cavity is spherically rounded.

5. Pen according to one of Claims 1 to 3, in which the said tip has the shape of a sphere and is housed inside a cylindrical cavity which is tapered outwards and able to retain said tip inside it and is coaxially formed in one end of the said stem.

## Patentansprüche

1. Stift (1), der sich zum Schreiben und/oder Tippen auf Bildschirme und/oder Tastaturen von elektronischer Ausrüstung wie Rechnern, Organisern, Palmtops, oder Telefonen eignet, mit einem länglichen Schaft (2), der an mindestens einem Ende (2e) mit einem koaxialen Hohlraum (3) versehen ist, in dem eine abgerundete Spitze (4) untergebracht und gehalten werden kann, die aus einem Material hergestellt ist, das aus einer synthetische oder natürliche Hartsteine umfassenden Gruppe ausgewählt ist, **dadurch gekennzeichnet, dass** die Hartsteine monokristalline Steine sind.

2. Stift nach Anspruch 1, wobei die Spitze (4) aus monokristallinem synthetischem Rubin hergestellt ist.

3. Stift nach Anspruch 1, wobei die Spitze aus monokristallinem synthetischem Saphir hergestellt ist.

4. Stift nach einem der vorhergehenden Ansprüche, wobei der längliche Schaft (2) an einem Ende in einem Anschnitt endet, in dem ein zylindrischer Sitz (3) ausgebildet ist, der sich nach außen verjüngt und in sich die Spitze (4) unterbringen kann, die ebenfalls als Zylinder ausgebildet ist, wobei mindestens deren Ende (4f), das von dem Hohlraum vorragt, kugelförmig abgerundet ist.

5. Stift nach einem der Ansprüche 1 bis 3, wobei die Spitze die Form einer Kugel hat und in einem zylindrischen Hohlraum untergebracht ist, der sich nach außen verjüngt und die Spitze in sich halten kann und in einem Ende des Schafts koaxial ausgebildet ist.

## Revendications

1. Stylet (1) adapté pour écrire et/ou taper sur des écrans et/ou des claviers d'équipements électroniques tels que des ordinateurs, des agendas électroniques, des ordinateurs de poche, ou des téléphones, comprenant une tige allongée (2) pourvue à au moins une extrémité (2e) d'une cavité coaxiale (3) capable de recevoir et de retenir à l'intérieur une pointe arrondie (4), cette pointe (4) étant fabriquée en un matériau choisi parmi un groupe comprenant des pierres dures synthétiques ou naturelles, **caractérisé en ce que** lesdites pierres dures sont des pierres monocristallines.

2. Stylet selon la revendication 1, dans lequel ladite pointe (4) est fabriquée en rubis synthétique monocristallin.

3. Stylet selon la revendication 1, dans lequel ladite pointe est fabriquée en saphir synthétique monocristallin.

4. Stylet selon l'une quelconque des revendications précédentes, dans lequel ladite tige allongée (2) se termine à une extrémité par une portion dans laquelle est formé un siège cylindrique (3), ledit siège étant effilé vers l'extérieur et pouvant recevoir à l'intérieur ladite pointe (4) qui est aussi en forme de cylindre et dont au moins l'extrémité (4f) dépassant de ladite cavité est arrondie en forme de sphère.

5. Stylet selon l'une quelconque des revendications 1 à 3, dans lequel ladite pointe a la forme d'une sphère et est reçue à l'intérieur d'une cavité cylindrique qui est effilée vers l'extérieur et qui peut retenir ladite pointe à l'intérieur et qui est formée coaxialement dans une extrémité de ladite tige.
